# EUROPEAN PATENT SPECIFICATION

(11) **EP 1 918 155 B1**
(45) Date of publication and mention of the grant of the patent: **23.05.2012**
(21) Application number: 07020936.6
(22) Date of filing: 25.10.2007
(51) Int. Cl.: B60N 2/28, A47D 13/02

(54) **Safety carrier for infant with a one-handed release mechanism**
Sicherheitsträger für Kinder mit Einhand-Lösevorrichtung
Support sécurisé pour enfant avec un mécanisme de libération manuel

(30) Priority: 26.10.2006 CN 200620066818 U
(43) Date of publication of application: 07.05.2008
(73) Proprietor: Lerado (Zhong Shan) Industrial Co., Ltd., Zhong Shan City Guangdong (CN)
(72) Inventor: Chang, Chen-Tai, Taibao City Chiayi County 612 (TW)
(74) Representative: TER MEER - STEINMEISTER & PARTNER GbR

(56) References cited:
- EP-A- 1 029 768
- EP-A- 1 574 389
- DE-U1- 20 001 963
- DE-U1- 20 110 226
- DE-U1- 20 215 837
- DE-U1- 29 602 814
- US-A1- 2004 164 593

## Description

### BACKGROUND OF THE INVENTION

### FIELD OF THE INVENTION

The present invention relates to a baby carrier which is connectable with a baby transporting device for carrying a baby outdoor by either hand carry or vehicle transportation. More particularly, the present invention relates to a baby carrier which is engageable and lockable to a stroller by a pair of connecting plugs and also be disengageable from the stroller simultaneously by gripping a one-hand release actuator which mounted on the handle thereof for easy access and gripping on by user.

### DESCRIPTION OF THE RELATED ART

Traditional baby stroller is a useful vehicle for parents to walk their baby outdoor. When arrived by car, the baby shall be pulling out from a baby safety seat in the car and turned to be tied up on a stroll carefully.

In many countries, baby or infant is obliged to sit in a special safety seat while transporting by car under some regulations. Under the regulation, for car, the special safety seat should be equipped with a five-point safety belt; for stroller, should be equipped with at least a three-point safety belt.

However, while the parents taking the baby out of the special safety seat by untying the five-point safety belt extremely carefully and quietly as possible as they can, and going to tie the baby to a stroller by snapping up the three-point safety belt, this is easy to wake up the baby from sleeping.

In view of such an annoying situation, the present market now was selling a safety baby seat which can be fixed in and removed from a car seat and could be connected to a stroller without waking up the baby. For instance, a safety seat with such purpose being disclosed in U.S. Patent No. 5,676,386 which is connectable to an armrest of a stroller.

As the armrest of U.S. Patent No. 5,676,386 is a necessary that must be equipped for connecting the safety seat to the stroller, but it would unavoidably stop the folding of the stroller in lateral direction, therefore the user is made to detach the armrest every time while need to fold and downsize the stroller in lateral direction.

In order to eliminate such a drawback of the foregoing, and provide some more purchasing choices and convenience for the user, there is a continuing need for new and improved baby safety seat structures which can be connected to a stroller without the troublesome of installing and uninstalling the armrest before taking a full folding to the stroller.

US 2004/0164593 A1 is concerned with a device for removably fitting carrycot seats and carrycots to baby carriages. Here, a carrycot seat or carrycot comprises a rigid inverted-U handle, wherein each of the lower ends of this handle incorporates an anchoring mechanism for its direct anchoring in a respective attachment being laterally provided on the baby carriage. The handle comprises a control being adapted to actuate the two anchoring mechanisms for simultaneously unlocking them.

In detail, each of the anchoring mechanism is formed as a connecting plug having a latch member movable between a locked position and an unlocked position, a housing for movably receiving the latch member, and at least one resilient member being adapted to bias the latch member toward the locked position. The latch member which is completely accommodated within the housing is rotatably movable between its locked and unlocked position.

### SUMMARY OF THE INVENTION

The object underlying the present invention is to provide an improved safety carrier for infant with one-handed release mechanism that facilitates handling and improves the reliability of the locking mechanism.

This object is achieved by the safety carrier according to claim 1.

Accordingly, the baby carrier is engageable and lockable with a baby transporting device, such as a car seat, a baby safety seat or baby stroller. The baby carrier includes a pair of connecting plugs, a handle and a one-hand release actuator which mounted on the handle for easy access visible to user.

The baby transporting device, for instance a baby stroller, has a pair of sockets mounted on both sides thereof for lockably and unlockably connecting with the pair of connecting plugs.

The connecting plugs each has at least a latch member associated with the one-hand release actuator and extends outwardly for locking the connecting plugs in the sockets, and unlocking the connecting plugs from the sockets by griping the one-hand release actuator with one hand of the user.

For achieving more safe operation, the one-hand release actuator may further include a safety lock to prevent a lay user from error trying operation that may release the connecting plugs depart from the sockets in accident.

Additional features and advantages of the invention will be set forth in the description to follow, and in part will be apparent from the description, or may be learned by practice of the invention. The objectives and other advantages of the invention will be realized and attained by the structure particularly pointed out in the written description and claims as well as the appended drawings.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention are incorporated in and constitute a part of this specification, illustrate embodiments of the invention and together with the description serve to explain the principles of the invention. In the drawings:

FIG. 1 is a perspective view showing a baby carrier embodiment of the present invention connected with a baby transporting device such as a baby stroller.

FIG. 2 is a perspective view showing the baby carrier embodiment of the present invention.

FIG. 3 is a partially exploded view showing the structure of the baby carrier.

FIG. 4 is a partially enlarged exploded view showing the structure of the baby carrier of FIG. 3.

FIG. 5 is a cross-sectional schematic view showing an example structure of one-hand release actuator of the baby carrier according to the present invention in a locked position.

FIG. 6 is a cross-sectional schematic view showing the one-hand release actuator of the baby carrier according to the present invention in an unlocked position.

FIG. 7 is a cross-sectional schematic view showing the connecting plugs of the baby carrier embodiment according to the present invention in a locked position.

FIG. 8 is a cross-sectional schematic view showing the connecting plugs of the baby carrier embodiment according to the present invention in an unlocked position.

FIG. 9 is a schematic view showing a rotational adjustment of the handle of the baby carrier embodiment according to the present invention.

FIG. 10 is a schematic cross-sectional view showing another structure of the connecting plug useful for the understanding of the present invention.

### DETAILED DESCRIPTION OF THE PREFERRED EMBODIMENTS

Reference will now be made in detail to the preferred embodiments of the present invention, examples of which are illustrated in the accompanying drawings.

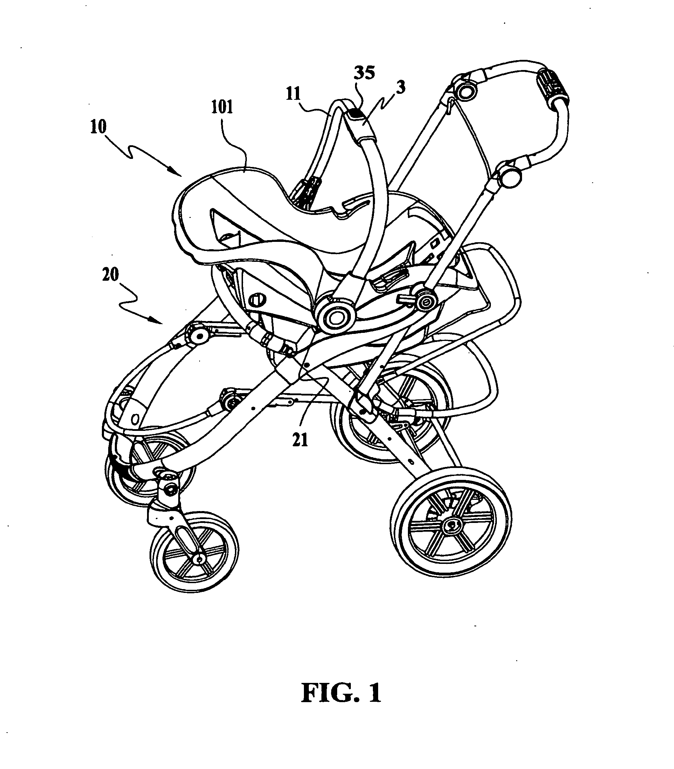

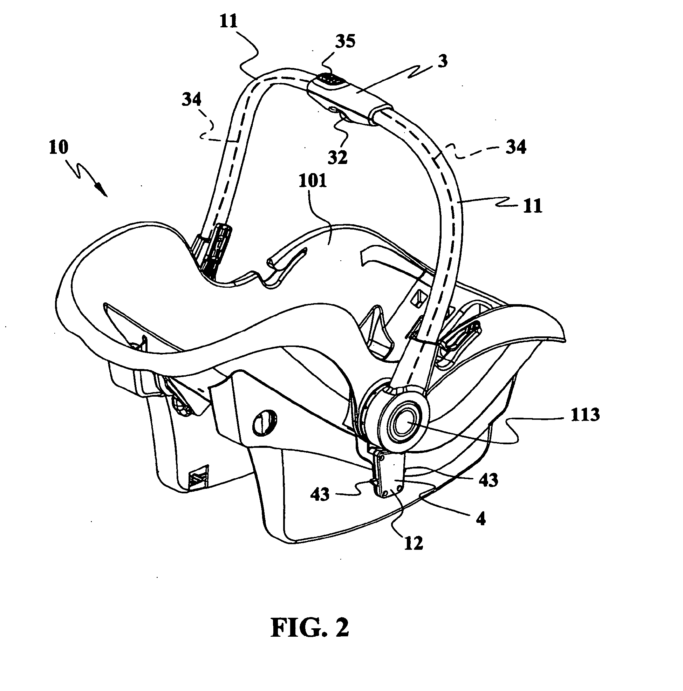

Referring to FIGS. 1 and 2, an embodiment of baby carrier 10 according to the present invention is engageable and lockable with a baby transporting device 20. The embodiments of the baby transporting device 20 may include, but are not limited to a car seat, a baby safety seat, a connecting base adapted to secured a baby safety seat to a car seat, a wheeled rack or a baby stroller; each equips with a pair of sockets 21 on the both sides thereof.

The baby carrier 10 of this embodiment, comprises at least a baby accommodating space 101 for receiving a baby or infant to sit or sleep therein, a handle 11 for hand carrying by an user, a pair of connecting plugs 4 for lockably connecting to the socket 21, and a one-hand release actuator 3 for unlocking the connecting plugs 4 to detach from the sockets 21.

The connecting plugs 4 each has at least a latch member 43 associated with the one-hand release actuator 3. The latch member 43 has a locked position extending outwardly for locking the connecting plugs 4 in the sockets 21, and an unlocked position for releasing the connecting plugs 4 from the sockets 21 by griping with one hand to actuate the one-hand release actuator 3.

For achieving a more safe operation, the one-hand release actuator 3 may equip with a safety lock 35 to prevent a lay user from error trying which may cause the connecting plugs 4 turned to depart from the socket 21 without any noticeable precautions.

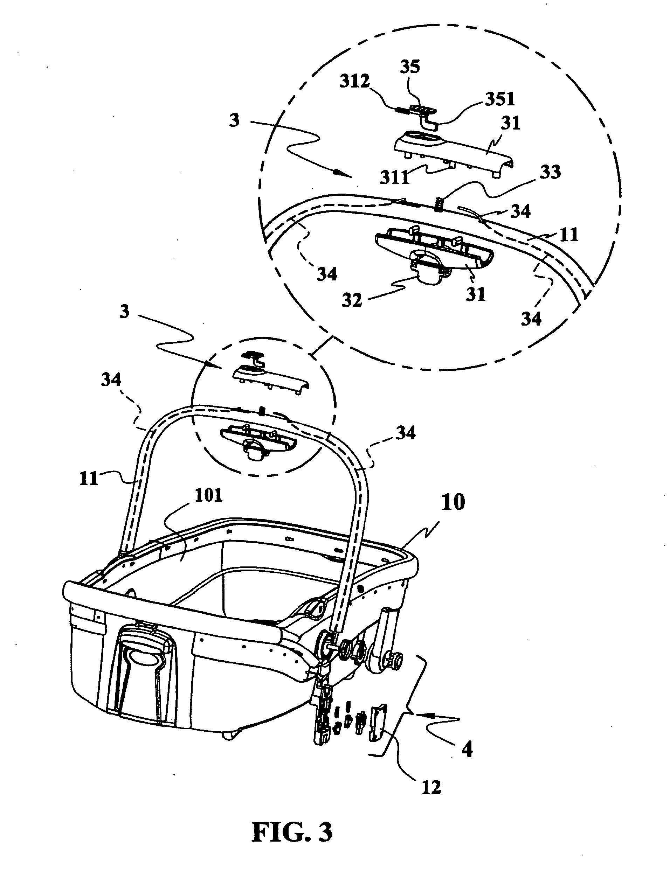

Referring to FIG. 3, an example structure of the one-hand release actuator 3 according to the present invention, includes a housing 31 mounted on the handle 11, a sliding member 32 slidably receiving in the housing 31 for moving between an actuated position and an unactuated position, a connecting member 34 connected between the sliding member 32 and the latch member 43, and a resilient member 33 abutted on the sliding member 32 for biasing the sliding member 32 toward its unactuated position.

It would be appreciated, the housing 31 is formed with a post 311 and the resilient member 33 is embodied as a compression spring sleeved on the post 311, so as to keep the axle of the compression spring substantially aligned with the moving direction of the sliding member 32.

The safety lock 35 is movably received in the housing 31 for sliding in a direction to lock the sliding member 32 in the unactuated position.

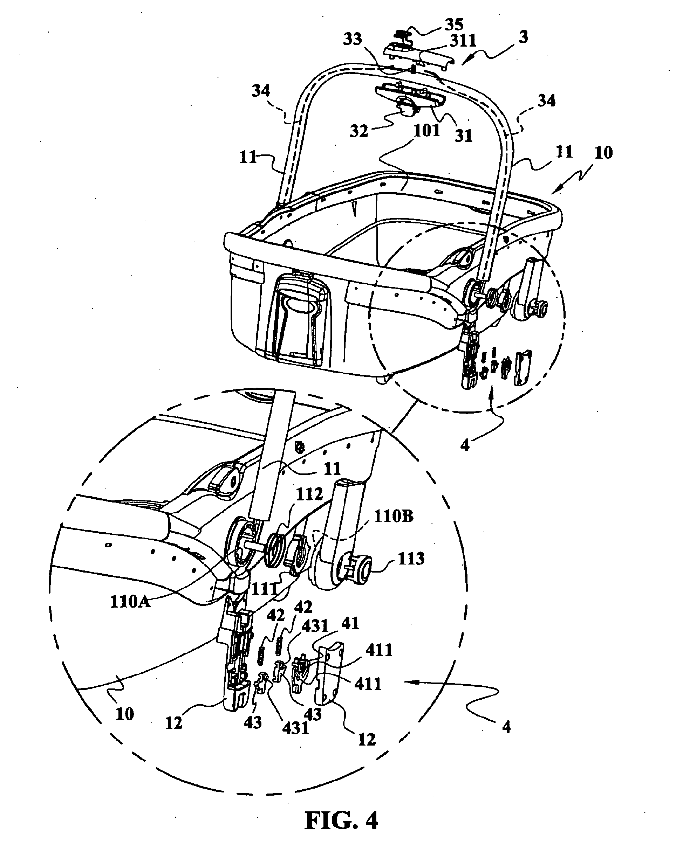

Referring to FIG. 4, the connecting plugs 4 may include a housing 12, at least a latch member 43 movably received in the housing 12 having a locked position and an unlocked position, a driving member 41 connected with the connecting member 34 for driving the latch member 43 moving from the unlocked position to the locked position, and a resilient member 42 for biasing the latch member 43 toward its locked position.

In an example structure of the connecting plugs 4, the latch member 43 may be formed with a protrusion 431 engaged with the driving member 41. It would also be more appreciated; the driving member 41 may be formed with a skewed guiding slot 411 for guiding the protrusion 431 thereby to drive the latch member 43 moving from the locked position to the unlocked position.

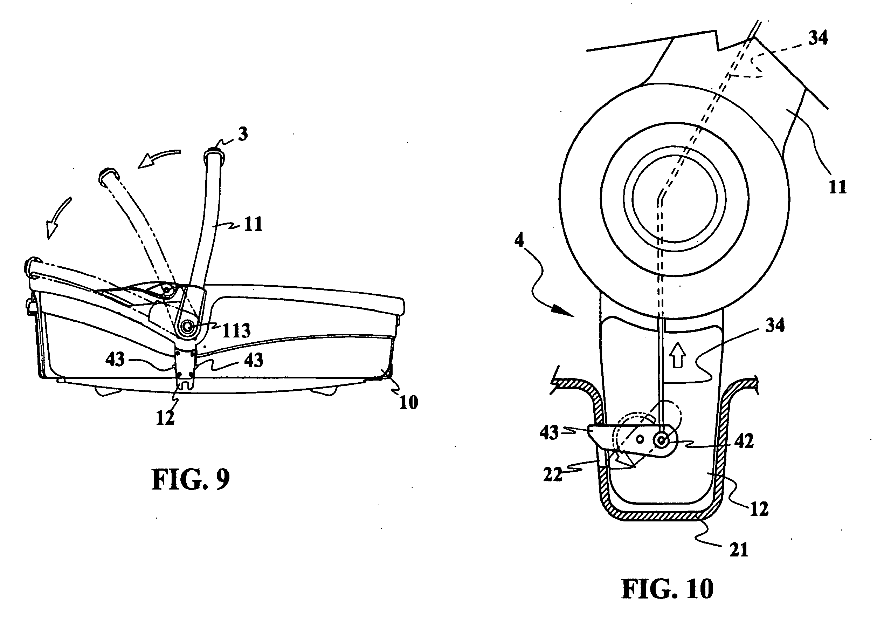

Referring FIGS 4 and 9, the handle 11 is rotatively adjustable by manipulating an angular position device. The angular position device may include a first pivot base 110A either mounted or formed integrally at the opposite sides of the baby carrier 10, a second pivot base 110B either mounted or formed integrally at the lower portion of the handle 11, a teethed sliding element 111 slidably engaged between the first pivot base 110A and the second pivot base 110B, a biasing member 112 abutted on one side of the teethed sliding element 111 for biasing the teethed sliding element 111 toward its engaged position, and a pushbutton 113 abutted on the another side of the teethed sliding element 111 to push the teethed sliding element 111 sliding against the biasing member 112, so as to disengage from the second pivot base 110B, thereby to allow the handle 11 freely to rotate to an adjusted angle position.

It would be more appreciated, that the first pivot base 110A and the second pivot base 110B both are formed with a plurality of inward protruded portion for engaging with the teethed sliding element 111. The teethed sliding element 111 is retained by the biasing member 112 in an engaged position engaged with both the first pivot base 110A and the second pivot base 110B.

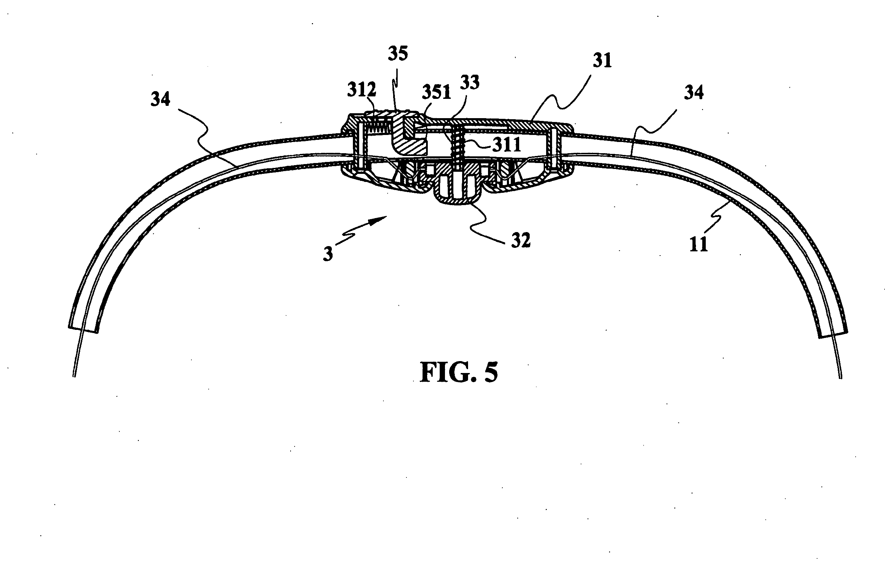

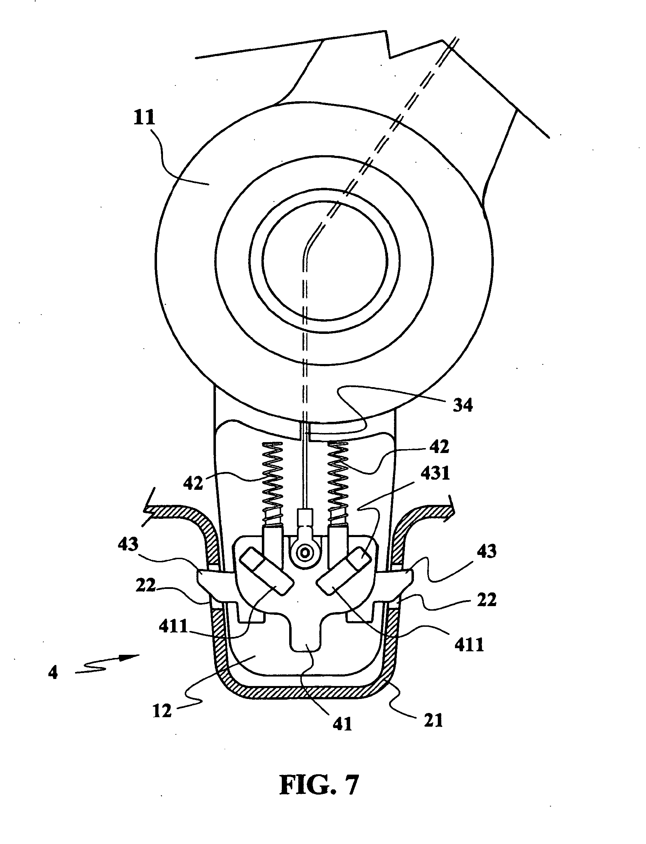

Referring to FIGS. 5 and 7, the sliding member 32 is biased and retained by the resilient member 33 in the unactuated position. The safety lock 11 has a leg 351 extended laterally for sliding into the moving path of the sliding member 32 in a locked position, thereby to stop the sliding member 32 leaving the unactuated position. Preferably, the one-hand actuator 3 further includes a resilient member 312 to bias the safety lock 11 toward its locked position.

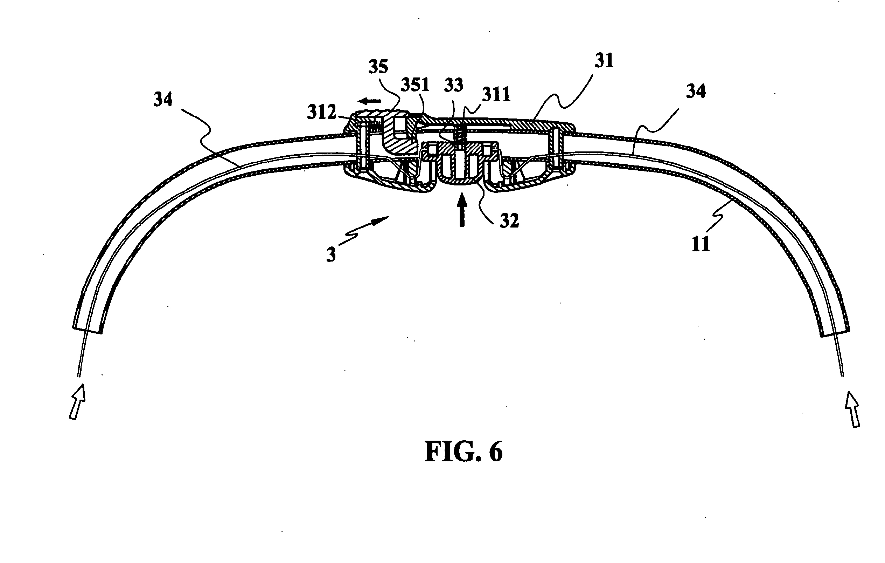

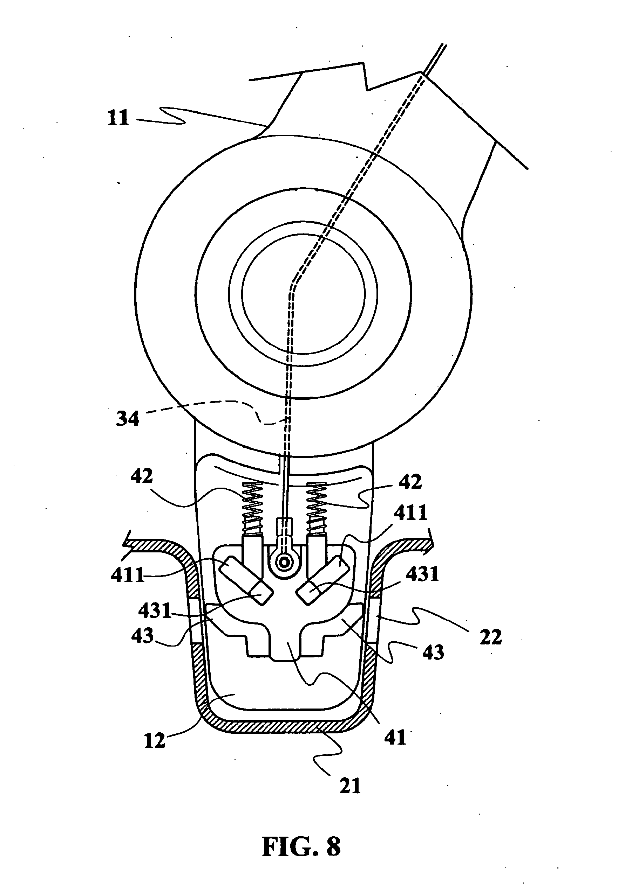

Referring to FIGS. 6 and 8 when safety lock 11 is unlocked, the sliding member 32 can be gripped to slide toward its actuated position, the connecting member 34 shall drive the latch member 43 moving toward its unlocked position, so as to allow the connecting plugs 4 freely to depart from the sockets 21.

Referring to FIGS. 7 and 8, the latch member 43 is kept in the locked position under the biasing of the resilient member 42. When the driving member 41 is pulled by the one-hand actuator 3 via the connecting member, the skewed guiding slot 411 guides the latch member 43 moving from the locked position to an unlocked position. By this way, the connecting plugs 4 is released from the sockets 21.

Referring to FIG. 10, an alternative example structure of the latch member 43 may be pivoted in the housing 12 and connected to the connecting member 34 directly, thereby to controllably rotate between a locked position and an unlocked position.

The connecting member 34 may be embodied as a flexible member, for example a wire threaded through the handle 11 and connected between the one-hand release actuator 3 and the latch member 43 in the connecting plugs 4.

Further, the latch member 43 is biased by a torsion spring 42 toward its locked position. The socket 21 is formed with an engageable portion 22 for engaging with the latch member 43 while in the locked position. In some embodiment, the engageable portion 22 may be embodied as at least an indent, a hole, or a ratchet-like on the wall of the sockets 21.

It will be apparent to those skilled in the art that various modifications and variations can be made in the infant carrier, stroller, and base system of the present invention without departing from the spirit or scope of the invention. Thus, it is intended that the present invention cover the modifications and variations of this invention provided they come within the scope of the appended claims and their equivalents.

A baby carrier has a pair of connecting plugs, a handle and a one-hand release actuator, providing a convenience for hand carrying a baby and transferring the baby between some transporting devices, such as a car, a safety seat, a wheeled rack and a baby stroller without pulling up the baby therefrom. The baby transporting device has a pair of sockets mounted on both sides thereof for lockably and unlockably connecting with the pair of connecting plugs. The connecting plugs each has at least a latch member associated with the one-hand release actuator and extends outwardly to lock the connecting plugs in the sockets, and unlock the connecting plugs from the sockets by griping the one-hand release actuator with one hand of the user.

## Claims

1. A safety carrier for infant with a one-handed release mechanism, adapted to detachably engaging with a baby transporting device (20) having a pair of sockets (21), and the safety carrier comprising:
- a baby carrier (10), having a baby accommodating space (101) and a handle (11);
- a pair of connecting plugs (4), mounted on the opposite sides of the baby carrier (10) for lockably inserting to the pair of sockets (21), and each having:
- a latch member (43) movable between a locked position and an unlocked position,
- a housing (12) for movably receiving the latch member (43), and at least a resilient member (42), said resilient member (42) being adapted to bias the latch member (43) toward the locked position;
- a one-hand release actuator (3) mounted on the handle (11) and associated with the latch member (43) for moving the latch member (43) from the locked position to the unlocked position;
wherein in the locked position the latch member (43) is adapted to extend outwardly for locking the corresponding connecting plug (4) of the pair of connecting plugs (4) in the corresponding socket (21) of the pair of sockets (21) and in the unlocked position the latch member (43) is adapted to release the corresponding connecting plug (4) of the pair of connecting plugs (4) from the corresponding socket of the pair of sockets (21), and
wherein each of the connecting plugs (4) further comprises a driving member (41) connected between the latch member (43) and a connecting member (34) connected between the one-hand release actuator (3) and the latch member (43), said driving member (41) formed with a skewed guiding slot (411) for driving the latch member (43) from the locked position to the unlocked position.

2. The safety carrier for infant with a one-handed release mechanism of claim 1, wherein the baby carrier (10) is adapted to be connected with the baby transporting device (20) by lockably inserting each connecting plug (4) of the pair of connecting plugs (4) into one socket (21) of the pair of sockets (21).

3. The safety carrier for infant with a one-handed release mechanism of claim 1 or 2, wherein the baby carrier (10) is adapted to be connected with the baby transporting device (20) by keeping the latch member (43) of each connecting plug (4) of the pair of connecting plugs (4) in the one socket (21) of the pair of sockets (21).

4. The safety carrier for infant with a one-handed release mechanism of claim 1, wherein the baby carrier (10) is a safety seat connected with the handle (11).

5. The safety carrier for infant with a one-handed release mechanism of claim 1, wherein the one-hand release actuator (3) comprises
- a housing (31) mounted on the handle (11);
- a sliding member (32), slidably received in the housing (31) for moving between an actuated position and an unactuated position;
the connecting member (34), connected between the sliding member and the latch member (43); and
- a resilient member (33), abutted on the sliding member (32) for biasing the sliding member (32) toward the unactuated position.

6. The safety carrier for infant with a one-handed release mechanism of claim 5, wherein the housing (31) has a post (311) substantially aligned with the sliding member (32), and the resilient member (33) is a compression spring sleeved on the post (311).

7. The safety carrier for infant with a one-handed release mechanism of claim 5, wherein the connecting member (34) is a wire threaded through the handle (11).

8. The safety carrier for infant with a one-handed release mechanism of claim 5, wherein the connecting member (34) is two wires threaded through the handle (11).

9. The safety carrier for infant with a one-handed release mechanism of claim 5, wherein the one-hand release actuator (3) further comprises a safety lock (35) for keeping the sliding member (32) in the unactuated position.

10. The safety carrier for infant with a one-handed release mechanism of claim 1, wherein the latch member (43) has a protrusion (431) slidably engaged in the skewed guiding slot (411) thereby to drive the latch member (43) by the driving member (41).

11. The safety carrier for infant with a one-handed release mechanism of claim 1, further included an angular position device operatively connected between the baby carrier (10) and the handle (11) for adjusting the handle (11), the angular position device comprising
- a first pivot base (110A), formed on the opposite sides of the baby carrier (10);
- a second pivot base (110B), formed on the lower portion of the handle (11);
- a teethed sliding element (111), slidably engaged between the first pivot base (110A) and the second pivot base (110B), a biasing member (112) abutted on one side of the teethed sliding element (111) for biasing the teethed sliding element (111) toward an engaged position; and
- a pushbutton (113) abutted on the another side of the teethed sliding element (111) to push the teethed sliding element (111) sliding so as to disengage from the second pivot base (110B), thereby to allow the handle (11) freely to rotate to an adjusted angle position.

12. The safety carrier for infant with a one-handed release mechanism of claim 11, wherein the first pivot base (110A) and the second pivot base (110B) both are formed with a plurality of inward protruded portion for engaging with the teethed sliding element (111).

13. A baby transporting device (20), said baby transporting device (20) being adapted to detachably engaging with a baby carrier (10) of a safety carrier according to any of claims 1 to 12.

14. The baby transporting device (20) according to claim 13, wherein the baby transporting device (20) has a pair of sockets (21), each of the sockets (21) being adapted to connect the baby carrier (10) to the baby transporting device (20) by lockably inserting one connecting plug (4) of a pair of connecting plugs (4) of the baby carrier (10) into the socket (21).

15. The baby transporting device (20) according to claim 14, wherein each socket (21) of the pair of sockets (21) is adapted to connect the baby carrier (10) to the baby transporting device (20) by keeping a latch member (43) of the one connecting plug (4) in the socket (21).

16. The baby transporting device (20) according to claim 15, wherein the pair of sockets (21) each has at least an engageable portion for engaging with the latch member (43).

17. The baby transporting device (20) according to any of claims 13 to 16, wherein the baby transporting device (20) is one of the following: a car seat, a baby safety seat, a connecting base adapted to secured a baby safety seat to a car seat, a wheeled rack, a baby stroller.

18. An arrangement comprising a safety carrier according to any of claims 1 to 12 and a baby transporting device (20) according to any of claims 13 to 17.

## Patentansprüche

1. Sicherheitstragevorrichtung für Kinder mit einem Einhandentriegelungsmechanismus, der ausgelegt ist, um mit einer Babytragevorrichtung (20), die ein Paar Buchsen (21) besitzt, lösbar in Eingriff zu sein, und wobei die Sicherheitstragevorrichtung Folgendes umfasst:
- eine Babytragevorrichtung (10), die einen einem Baby Platz bietenden Raum (101) und einen Griff (11) besitzt;
- ein Paar Verbindungsstecker (4), die auf den gegenüberliegenden Seiten der Babytragevorrichtung (10) befestigt sind, um einrastbar in das Paar Buchsen (21) eingeführt zu werden, und wovon jede Folgendes besitzt:
- eine Verriegelungseinheit (43), die zwischen einer verriegelten Position und einer entriegelten Position verstellbar ist,
- ein Gehäuse (12), um die Verriegelungseinheit (43) beweglich zu enthalten, und mindestens eine Federeinheit (42), wobei die Federeinheit (42) ausgelegt ist, um die Verriegelungseinheit (42) in Richtung der verriegelten Position vorzubelasten;
- einen Einhandentriegelungsaktor (3), der an dem Griff (11) angebracht ist und mit der Verriegelungseinheit (43) verbunden ist, um die Verriegelungseinheit (43) von der verriegelten Position in die entriegelte Position zu bewegen;
wobei in der verriegelten Position die Verriegelungseinheit (43) ausgelegt ist, um sich nach außen auszustrecken, um den entsprechenden Verbindungsstecker (4) des Paars Verbindungsstecker (4) in die entsprechende Buchse (21) des Paars Buchsen (21) einzurasten, und in der entriegelten Position die Verriegelungseinheit (43) ausgelegt ist, um den entsprechenden Verbindungsstecker (4) des Paars Verbindungsstecker (4) aus der entsprechenden Buchse (21) des Paars Buchsen (21) freizugeben, und
wobei jeder der Verbindungsstecker (4) ferner eine Antriebseinheit (41) umfasst, die zwischen der Verriegelungseinheit (41) und einer Verbindungseinheit (34), die zwischen dem Einhandentriegelungsaktor (3) und der Verriegelungseinheit (43) verbunden ist, verbunden ist, wobei die Antriebseinheit (43) mit einem schrägen Führungsschlitz (411) ausgebildet ist, um die Verriegelungseinheit (43) von der verriegelten Position in die entriegelte Position anzutreiben.

2. Sicherheitstragevorrichtung für Kinder mit einem Einhandentriegelungsmechanismus nach Anspruch 1, wobei die Babytragevorrichtung (10) ausgelegt ist, um mit einer Babybeförderungsvorrichtung (20) verbunden zu werden, indem jeder Verbindungsstecker (4) des Paars Verbindungsstecker (4) in eine Buchse (21) des Paars Buchsen (21) einrastbar eingeführt wird.

3. Sicherheitstragevorrichtung für Kinder mit einem Einhandentriegelungsmechanismus nach Anspruch 1 oder 2, wobei die Babytragevorrichtung (10) ausgelegt ist, um mit der Babybeförderungsvorrichtung (20) verbunden zu werden, indem die Verriegelungseinheit (43) von jedem Verbindungsstecker (4) des Paars Verbindungsstecker (4) in der einen Buchse (21) des Paars Buchsen (21) gehalten wird.

4. Sicherheitstragevorrichtung für Kinder mit einem Einhandentriegelungsmechanismus nach Anspruch 1, wobei die Babytragevorrichtung (10) ein Sicherheitssitz ist, der mit dem Griff (11) verbunden ist.

5. Sicherheitstragevorrichtung für Kinder mit einem Einhandentriegelungsmechanismus nach Anspruch 1, wobei der Einhandentriegelungsaktor (3) Folgendes umfasst:
- ein Gehäuse (31), das an dem Griff (11) befestigt ist,
- eine Gleiteinheit (32), die gleitfähig in dem Gehäuse enthalten ist, um sich zwischen einer betätigten Position und einer nicht betätigten Position zu bewegen;
die Verbindungseinheit (34), die zwischen der Gleiteinheit und der Verriegelungseinheit (43) verbunden ist; und
- eine Federeinheit (33), die an der Gleiteinheit (32) anliegt, um die Gleiteinheit (32) in Richtung der nicht betätigten Position vorzubelasten.

6. Sicherheitstragevorrichtung für Kinder mit einem Einhandentriegelungsmechanismus nach Anspruch 5, wobei das Gehäuse (31) einen Stift (311) besitzt, der im Wesentlichen auf die Gleiteinheit (32) ausgerichtet ist, und die Federeinheit (33) eine Schraubenfeder ist, die auf den Stift (311) aufgezogen ist.

7. Sicherheitstragevorrichtung für Kinder mit einem Einhandentriegelungsmechanismus nach Anspruch 5, wobei die Verbindungseinheit (34) ein Draht ist, der durch den Griff (11) geführt ist.

8. Sicherheitstragevorrichtung für Kinder mit einem Einhandentriegelungsmechanismus nach Anspruch 5, wobei die Verbindungseinheit (34) aus zwei Drähten besteht, die durch den Griff (11) geführt sind.

9. Sicherheitstragevorrichtung für Kinder mit einem Einhandentriegelungsmechanismus nach Anspruch 5, wobei der Einhandentriegelungsaktor (3) ferner einen Sicherheitsverschluss (35) enthält, um die Gleiteinheit (32) in der nicht betätigten Position zu halten.

10. Sicherheitstragevorrichtung für Kinder mit einem Einhandentriegelungsmechanismus nach Anspruch 1, wobei die Verriegelungseinheit (43) einen Überstand (431) besitzt, der gleitfähig in dem schrägen Führungsschlitz (411) in Eingriff ist, um **dadurch** die Verriegelungseinheit (43) durch die Antriebseinheit (41) anzutreiben.

11. Sicherheitstragevorrichtung für Kinder mit einem Einhandentriegelungsmechanismus nach Anspruch 1, die ferner eine Winkellagevorrichtung einschließt, die funktionstechnisch zwischen der Babytragevorrichtung (10) und dem Griff (11) verbunden ist, um den Griff (11) einzustellen, wobei die Winkellagevorrichtung Folgendes umfasst:
- eine erste Gelenkbasis (110A), die auf den gegenüberliegenden Seiten der Babytragevorrichtung (10) gebildet ist;
- eine zweite Gelenkbasis (110B), die an dem unteren Abschnitt des Griffs (11) gebildet ist;
- ein verzahntes Gleitelement (111), das gleitfähig zwischen der ersten Gelenkbasis (110A) und der zweiten Gelenkbasis (110B) in Eingriff ist, eine Vorbelastungseinheit (112), die an einer Seite des verzahnten Gleitelements (111) anliegt, um das verzahnte Gleitelement (111) in Richtung einer Eingriffposition vorzubelasten; und
- einen Druckknopf (113), der an der anderen Seite des verzahnten Gleitelements (111) anliegt, um das gezahnte Gleitelement zum Gleiten zu schieben, um es aus der zweiten Gelenkbasis (110B) auszurasten, um **dadurch** dem Griff (11) zu ermöglichen, sich frei in eine eingestellte Winkelposition zu drehen.

12. Sicherheitstragevorrichtung für Kinder mit einem Einhandentriegelungsmechanismus nach Anspruch 11, wobei sowohl die erste Gelenkbasis (110A) als auch die zweite Gelenkbasis (110B) mit mehreren nach innen vorstehenden Abschnitten gebildet sind, um mit dem verzahnten Gleitelement (111) in Eingriff zu gelangen.

13. Babybeförderungsvorrichtung (20), wobei die Babybeförderungsvorrichtung (20) ausgelegt ist, um abnehmbar mit einer Babytragevorrichtung (10) einer Sicherheitstragevorrichtung entsprechend einem der Ansprüche 1 bis 12 in Eingriff zu gelangen.

14. Babybeförderungsvorrichtung (20) nach Anspruch 13, wobei die Babybeförderungsvorrichtung (20) ein Paar Buchsen (21) besitzt, wobei jede der Buchsen (21) ausgelegt ist, um die Babytragevorrichtung (10) mit der Babybeförderungsvorrichtung (20) zu verbinden, indem ein Verbindungsstecker (4) des Paars Verbindungsstecker (4) der Babytragevorrichtung (10) in die Buchse (21) einrastend eingeführt wird.

15. Babybeförderungsvorrichtung (20) nach Anspruch 14, wobei jede Buchse (21) des Paars Buchsen (21) ausgelegt ist, um die Babytragevorrichtung (10) mit der Babybeförderungsvorrichtung (20) zu verbinden, indem eine Verriegelungseinheit (43) des einen Verbindungssteckers (4) in der Buchse (21) gehalten wird.

16. Babybeförderungsvorrichtung (20) nach Anspruch 15, wobei jede Buchse des Paars Buchsen (21) mindestens einen zu einem Eingriff fähigen Abschnitt besitzt, um mit der Verriegelungseinheit (43) in Eingriff zu gelangen.

17. Babybeförderungsvorrichtung (20) nach einem der Ansprüche 13 bis 16, wobei die Babybeförderungsvorrichtung (20) eine der Folgenden ist: ein Autositz, ein Babysicherheitssitz, eine Verbindungsbasis, die ausgelegt ist, um einen Babysicherheitssitz an einem Autositz zu befestigen, ein Gestell mit Rädern oder ein Kinderwagen.

18. Anordnung, die eine Sicherheitstragevorrichtung nach einem der Ansprüche 1 bis 12 und eine Babybeförderungsvorrichtung (20) nach einem der Ansprüche 13 bis 17 enthält.

## Revendications

1. Porte-bébé de sécurité avec un mécanisme de libération manipulé d'une seule main, adapté pour être engagé de façon détachable avec un dispositif de transport de bébé (20) ayant une paire de socles (21), le porte-bébé de sécurité comprenant :
- un porte-bébé (10) ayant un espace de réception pour bébé (101) et une poignée (11) ;
- une paire de plots de connexion (4), montés sur les côtés opposés du porte-bébé (10) et destinés à être insérés de manière verrouillable dans la paire de socles (21), possédant chacun :
- un élément de verrou (43) mobile entre une position bloquée et une position débloquée,
- un boîtier (12) pour recevoir de façon mobile l'élément de verrou (43), et
- au moins un élément élastique (42), ledit élément élastique (42) étant adapté à solliciter l'élément de verrou (43) vers la position bloquée ;
- un actionneur de libération manipulé d'une seule main (3) monté sur la poignée (11) et associé à l'élément de verrou (43) pour déplacer l'élément de verrou (43) de la position bloquée à la position débloquée ; dans lequel, dans la position bloquée, l'élément de verrou (43) est adapté à s'étendre vers l'extérieur pour bloquer le plot de connexion correspondant (4) de la paire de plots de connexion (4) dans le socle correspondant (21) de la paire de socles (21) et, dans la position débloquée, l'élément de verrou (43) est adapté à libérer le plot de connexion correspondant (4) de la paire de plots de connexion (4) depuis le socle correspondant de la paire de socles (21), et
dans lequel chaque plot de connexion (4) comprend en outre un élément d'entraînement (41) connecté entre l'élément de verrou (42) et un élément de connexion (34) connecté entre l'actionneur de libération manipulé d'une seule main (3) et l'élément de verrou (43), ledit élément d'entraînement (41) étant formé avec une fente de guidage en biais (411) pour entraîner l'élément de verrou (43) de la position bloquée à la position débloquée.

2. Porte-bébé de sécurité avec un mécanisme de libération manipulé d'une seule main selon la revendication 1, dans lequel le porte-bébé (10) est adapté à être connecté avec le dispositif de transport de bébé (20) en insérant de manière verrouillable chaque plot de connexion (4) de la paire de plots de connexion (4) dans un socle (21) de la paire de socles (21).

3. Porte-bébé de sécurité avec un mécanisme de libération manipulé d'une seule main selon la revendication 1 ou 2, dans lequel le porte-bébé (10) est adapté à être connecté avec le dispositif de transport de bébé (20) en maintenant l'élément de verrou (43) de chaque plot de connexion (4) de la paire de plots de connexion (4) dans un socle (21) de la paire de socles (21).

4. Porte-bébé de sécurité avec un mécanisme de libération manipulé d'une seule main selon la revendication 1, dans lequel le porte-bébé (10) est un siège de sécurité connecté à la poignée (11).

5. Porte-bébé de sécurité avec un mécanisme de libération manipulé d'une seule main selon la revendication 1, dans lequel l'actionneur de libération manipulé d'une seule main (3) comprend
- un boîtier (31) monté sur la poignée (11) ;
- un élément coulissant (32), reçu en coulissement dans le boîtier (31) pour un mouvement entre une position actionnée et une position non actionnée ;
- l'élément de connexion (34) connecté entre l'élément coulissant et l'élément de verrou (43) ; et
- un élément élastique (33), en butée sur l'élément coulissant (32) pour solliciter l'élément coulissant (32) vers la position non actionnée.

6. Porte-bébé de sécurité avec un mécanisme de libération manipulé d'une seule main selon la revendication 5, dans lequel le boîtier (31) comprend un poteau (311) sensiblement aligné avec l'élément coulissant (32), et l'élément élastique (33) et un ressort de compression disposé à la manière d'un fourreau sur le poteau (311).

7. Porte-bébé de sécurité avec un mécanisme de libération manipulé d'une seule main selon la revendication 5, dans lequel l'élément de connexion (34) est un fil passé à travers la poignée (11).

8. Porte-bébé de sécurité avec un mécanisme de libération manipulé d'une seule main selon la revendication 5, dans lequel l'élément de connexion (34) est formé par deux fils passés à travers la poignée (11).

9. Porte-bébé de sécurité avec un mécanisme de libération manipulé d'une seule main selon la revendication 5, dans lequel l'actionneur de libération manipulé d'une seule main (3) comprend en outre un verrou de sécurité (35) pour maintenir l'élément coulissant (32) dans la position non actionnée.

10. Porte-bébé de sécurité avec un mécanisme de libération manipulé d'une seule main selon la revendication 1, dans lequel l'élément de verrouillage (43) comprend une projection (431) engagée en coulissement dans la fente de guidage en biais (411) pour entraîner l'élément de verrouillage (43) par l'élément d'entraînement (41).

11. Porte-bébé de sécurité avec un mécanisme de libération manipulé d'une seule main selon la revendication 1, incluant en outre un dispositif de position angulaire fonctionnellement connecté entre le porte-bébé (10) et la poignée (11) pour ajuster la poignée (11), le dispositif de position angulaire comprenant
- une première base de pivot (110A), formée sur les côtés opposés du porte-bébé (10) ;
- une seconde base de pivot (110B), formée sur la portion inférieure de la poignée (11) ;
- un élément coulissant denté (111), engagé en coulissement entre la première base de pivot (110A) et la seconde base de pivot (110B), un élément de sollicitation (112) en butée contre un côté de l'élément coulissant denté (111) pour solliciter l'élément coulissant denté (111) vers une position engagée ; et
- un bouton-poussoir (113) en butée contre l'autre côté de l'élément coulissant denté (111) pour pousser l'élément coulissant denté (111) en coulissement de manière à le dégager de la seconde base de pivot (110B) et permettre ainsi à la poignée (11) de tourner librement vers une position angulaire ajustée.

12. Porte-bébé de sécurité avec un mécanisme de libération manipulé d'une seule main selon la revendication 11, dans lequel la première base de pivot (110A) et la seconde base de pivot (110B) sont formées toutes les deux avec une pluralité de portions en projection vers l'intérieur afin d'engager l'élément coulissant denté (111).

13. Dispositif de transport de bébé (20), ledit dispositif de transport de bébé (20) étant adapté à être engagé de façon détachable avec un porte-bébé (10) d'un porte-bébé de sécurité selon l'une quelconque des revendications 1 à 12.

14. Dispositif de transport de bébé (20) selon la revendication 13, dans lequel le dispositif de transport de bébé (20) comprend une paire de socles (21), chacun des socles (21) étant adapté à connecter le porte-bébé (10) au dispositif de transport de bébé (20) en insérant de manière verrouillable un plot de connexion (4) d'une paire de plots de connexion (4) du porte-bébé (10) dans le socle (21).

15. Dispositif de transport de bébé (20) selon la revendication 14, dans lequel chaque socle (21) de la paire de socles (21) est adapté à connecter le porte-bébé (10) sur le dispositif de transport de bébé (20) en maintenant un élément de verrou (43) du plot de connexion concerné (4) dans le socle (21).

16. Dispositif de transport de bébé (20) selon la revendication 15, dans lequel chacun des socles (21) de ladite paire de socles comprend au moins une portion d'engagement destinée à être engagée avec l'élément de verrou (43).

17. Dispositif de transport de bébé (20) selon l'une des revendications 13 à 16, dans lequel le dispositif de transport de bébé (20) est un dispositif parmi les suivants : un siège automobile, un siège de sécurité pour bébé, une base de connexion adaptée à fixer un siège de sécurité pour bébé sur un siège d'automobile, un chariot à roues, une poussette pour bébé.

18. Agencement comprenant un porte-bébé de sécurité selon l'une quelconque des revendications 1 à 12 et un dispositif de transport de bébé (20) selon l'une quelconque des revendications 13 à 17.
